# EUROPEAN PATENT SPECIFICATION

(11) **EP 1 076 998 B1**
(45) Date of publication and mention of the grant of the patent: **11.01.2012**
(21) Application number: 98921904.3
(22) Date of filing: 15.05.1998
(51) Int. Cl.: H04N 7/30

(54) **METHOD AND APPARATUS FOR PADDING INTERLACED MACROBLOCK TEXTURE INFORMATION**
VERFAHREN UND VORRICHTUNG ZUR TEXTURINFORMATIONSFÜLLUNG EINES ZWISCHEN ZEILENMAKROBLOCKES
PROCEDE ET DISPOSITIF POUR REMPLIR DES INFORMATIONS DE TEXTURE A MACROBLOCS ENTRELACEES

(30) Priority: 14.03.1998 KR 9808637
(43) Date of publication of application: 21.02.2001
(60) Divisional application: 08004285.6
(73) Proprietor: Daewoo Electronics Corporation, Seoul (KR)
(72) Inventor: LEE, Sang, Hoon, Video Research Center, Namdaemoon-ro, Jung-gu, Seoul 100-095 (KR)
(74) Representative: Turi, Michael
(86) International application number: PCT/KR1998/000122
(87) International publication number: WO 1999/048298

(56) References cited:
- EP-A1- 0 577 365
- US-A- 5 623 310

## Description

### TECHNICAL FIELD OF THE INVENTION

The present invention relates to a method and apparatus for padding interlaced macroblock texture information; and, more particularly, to a method and apparatus capable of padding texture information on a previous frame on a macroblock-by-macroblock basis in order to perform a motion estimation in the interlaced coding technique.

### BACKGROUND ART

In digitally televised systems such as video-telephone, teleconference and high definition television systems, a large amount of digital data is needed to define each video frame signal since a video line signal in the video frame signal comprises a sequence of digital data referred to as pixel values. Since, however, the available frequency bandwidth of a conventional transmission channel is limited, in order to transmit the large amount of digital data therethrough, it is necessary to compress or reduce the volume of data through the use of various data compression techniques, especially in the case of such low bit-rate video signal encoders as video-telephone and teleconference systems.

One of such techniques for encoding video signals for a low bit-rate encoding system is the so-called object-oriented analysis-synthesis coding technique, wherein an input video image is divided into objects, and three sets of parameters for defining the motion, contour and pixel data of each object are processed through different encoding channels.

One example of object-oriented coding scheme is the so-called MPEG(Moving Picture Express Group) phase 4(MPEG-4), which is designed to provide an audio-visual coding standard for allowing content-based interactivity, improved coding efficiency and/or universal accessibility in such applications as low-bit rate communication, interactive multimedia(e.g., games, interactive TV, etc.) and area surveillance(see, for instance, MPEG-4 Video Verification Model Version 7.0, International Organisation for Standardisation, ISO/IEC JTC1/SC29/WG11 MPEG97/N1642, April 1997).

According to the MPEG-4, an input video image is divided into a plurality of video object planes (VOP's), which correspond to entities in a bitstream that a user can access and manipulate. A VOP can be referred to as an object and represented by a bounding rectangle whose width and height may be the smallest multiple of 16 pixels(a macroblock size) surrounding each object so that the encoder may process the input video image on a VOP-by-VOP basis, i.e., an object-by-object basis.

Each VOP in the MPEG-4 is described by three sets of parameters defining shape information, motion information and texture information, i.e., color information thereof, wherein the shape information represented by, e.g., a binary mask corresponds to the contour of said each VOP, i.e., the boundary of an object; the motion information represents spatial correlation between a current frame and a corresponding previous frame; and the texture information consists of luminance and chrominance data.

Meanwhile, since the texture information for two input video images sequentially received has naturally time redundancy, it is desirable to get rid of the time redundancy therein by using a motion estimation and compensation technique in order to efficiently encode the texture information in the MPEG-4.

A progressive image padding technique, i.e., a conventional repetitive padding technique, is applied on a frame-by-frame basis to the VOP prior to the motion estimation and compensation. In principle, the repetitive padding technique fills the transparent area outside the object of the VOP by repeating boundary pixels of the object, wherein the boundary pixels are located on the contour of the object. It is preferable to perform the repetitive padding technique with respect to the reconstructed shape information, which is generated by decoding the encoded shape information in the reverse order along the encoding scheme. Each boundary pixel is repeated towards the exterior of the object. If transparent pixels in the transparent area outside the object can be filled by the repetition of more than one boundary pixel, taking the average of the repeated values as a padded value is preferred. This progressive padding process is generally divided into 3 steps, i.e., a horizontal repetitive padding; a vertical repetitive padding and an exterior padding(see, MPEG-4 Video Verification Model Version 7.0).

While the progressive padding technique is used to perform the motion estimation and compensation based on each frame generated for every 1/30 seconds as described above, an interlaced padding technique is required to perform the motion estimation and compensation on a field-by-field basis, wherein two fields, i.e., a top and a bottom field are combined to be reconstructed as a frame, i.e., an interlaced texture image. The interlaced encoding technique to perform the motion estimation and compensation on a field-by-field basis may be suitably used to encode precisely the interlaced texture information either for the fast movement such as a sport, horse racing and car racing or with a rarely field correlation, i.e., with a rarely temporal correlation between the top and the bottom fields.

However, if the padding for each field block is performed independently without considering its field correlation based on the interlaced texture information as described in the progressive padding technique, there may exist some pixel which will not be modified based on only the object pixels of the object, but will be modified by padding when taking account of their field correlation, needing two consecutive fields, i.e., the top and the bottom fields, included in the interlaced texture information.

EP 577 365 A1 describes an encoding and decoding method for picture signals adaptively changing from mode of inhibiting interframe predictive coding to mode of inhibiting interfield predictive coding over entire macro-blocks of scanned interlace data in each slice. The picture signal encoding method for interlaced scanned picture data involves receiving the interlaced data, and transforming it using an adaptively selected frame-based or field-based DCT transformation. The scanned data is divided into macro-blocks and each block is subjected to the transformation. A preceding frame of scanned data is stored, and compensation is provided for movement between the received interlace picture data and the preceding frame of data, to produce predictive picture data. The latter is subtracted from the received data to provide data to be transformed.

### DISCLOSURE OF THE INVENTION

It is, therefore, an object of the invention to provide a method and apparatus for padding the interlaced texture information with its field correlation on a texture macroblock-by-texture macroblock basis to perform a motion estimation and compensation.

In accordance with the invention, there is provided a method and an apparatus according to the independent claims. Preferred embodiments thereof are defined in the dependent claims.

### BRIEF DESCRIPTION OF THE DRAWINGS

The above and other objects and features of the present invention will become apparent from the following description of preferred embodiments given in conjunction with the accompanying drawings, in which:
Fig. 1 shows a schematic block diagram of a conventional apparatus for encoding interlaced texture information of an object in a video signal;
Fig. 2 presents a flow chart for illustrating the operation of the previous frame processing circuit shown in Fig. 1 in accordance with the present invention;
Figs. 3A and 3B describe an exemplary boundary macroblock and a top and a bottom boundary field blocks for the boundary macroblock, respectively;
Figs. 3C to 3E represent a padding procedure of the top and the bottom boundary field blocks sequentially in accordance with the present invention; and
Fig. 4 depicts a plurality of undefined adjacent blocks for an exemplary VOP and the padding directions for each undefined adjacent block.

### MODE OF CARRYING OUT THE INVENTION

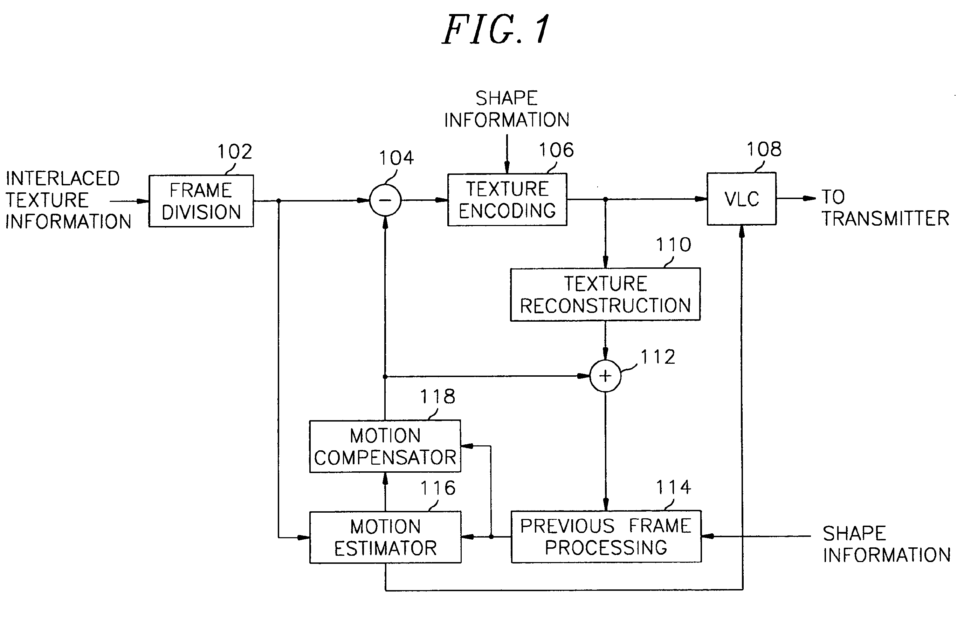

Referring to Fig. 1, there is shown a schematic block diagram of an apparatus for encoding interlaced texture information on a current frame, wherein the interlaced texture information may be referred as a current VOP in MPEG-4. The interlaced texture information is partitioned into a plurality of texture macroblocks to be applied to a frame division circuit 102, wherein each texture macroblock has M x N texture pixels, M and N being positive even integers typically ranging between 4 and 16.

The frame division circuit 102 divides each texture macroblock into a top and a bottom field block, wherein the top field block having M/2 x N texture pixels contains every odd row of said each texture macroblock and the bottom field block having the other M/2 x N texture pixels contains every even row of said each texture macroblock. The top and the bottom field blocks for said each texture macroblock are sequentially provided as a current top and a current bottom field blocks, respectively, to a subtractor 104 and a motion estimator 116.

Essentially at the same time, previous interlaced texture information is read out from a previous frame processing circuit 114 and provided to the motion estimator 116 and a motion compensator 118, wherein the previous interlaced texture information of a previous frame has previous texture pixels and precedes the interlaced texture information of the current frame by one frame period. The previous frame is also partitioned into a plurality of search regions and each search region is divided into a top and a bottom search region, wherein the top search region having P(M/2 x N) previous texture pixels contains every odd row of said each search region and the bottom search region having the other P(M/2 x N) previous texture pixels contains every even row of said each search region, P being a positive integer, typically, 2.

The motion estimator 116 determines motion vectors for the current VOP on a field-by-field basis. First, the motion estimator 116 detects a previous texture macroblock in the previous frame for each current top or bottom field block, wherein the previous texture macroblock is located at a same position as said each current top or bottom field block. Then the previous texture macroblock is divided into a previous top and a previous bottom field blocks; and errors between said each current top or bottom field block and two previous top and bottom field blocks are calculated. Since the top and the bottom search regions have a plurality of candidate top and candidate bottom field blocks including the previous top and the previous bottom field blocks, respectively, said each current top or bottom field block is displaced on a pixel-by-pixel basis within the top and the bottom search regions in accordance with each candidate top and each candidate bottom field block, respectively; and, at each displacement, two errors between said each current top or bottom field block and said each candidate top and said each candidate bottom field blocks are compared with each other.

As described above, the motion estimator 116 performs motion estimation of said each current top or bottom field block with respect to its previous top and bottom field blocks and selects, as an optimum candidate field block or a most similar field block, a candidate top or bottom field block which yields a minimum error. Outputs from the motion estimator 116 are a motion vector and a field indication flag being provided to the motion compensator 118 and a variable length coding(VLC) circuit 108, wherein the motion vector denotes a displacement between said each current top or bottom field block and the optimum candidate field block and the field indication flag represents whether the optimum candidate field block belongs to the top search region or not.

The motion compensator 118 performs a motion compensation by making the optimum candidate field block shift by the motion vector toward said each current top or bottom field block depending on the field indication flag, to thereby provide a motion-compensated optimal candidate field block as a predicted top or bottom field block for said each current top or bottom field block to the subtractor 104 and an adder 112.

The subtractor 104 obtains an error field block by subtracting the predicted top or bottom field block from said each current top or bottom field block on a corresponding pixel-by-pixel basis, to provide the error field block to a texture encoding circuit 106.

In the texture encoding circuit 106, the error field block may be subjected to an orthogonal transform for removing spatial redundancy thereof and then transform coefficients are quantized, to thereby provide the quantized transform coefficients to the VLC circuit 108 and a texture reconstruction circuit 110. Since a conventional orthogonal transform such as a discrete cosine transform (DCT) is performed on a DCT block-by-DCT block basis, each DCT block having typically 8 x 8, i.e., M/2 x N/2, texture pixels, the error field block having 8 x 16 error texture pixels may be preferably divided into two DCT blocks in the texture encoding circuit 106. If necessary, before performing the DCT, each error field block may be DCT-padded based on the shape information or the reconstructed shape information of each VOP in order to reduce higher frequency components which may be generated in the DCT processing. For example, a predetermined value, e.g., '0', may be assigned to the error texture pixels at the exterior of the contour in each VOP.

The VLC circuit 108 performs a statistical encoding on the quantized transform coefficients fed from the texture encoding circuit 106 and the field indication flag and the motion vector, for said each current top or bottom field block, fed from the motion estimator 116 by using, e.g., a conventional variable length coding technique, to thereby provide statistically encoded data to a transmitter(not shown) for the transmission thereof.

In the meantime, the texture reconstruction circuit 110 performs an inverse quantization and inverse transform on the quantized transform coefficients to provide a reconstructed error field block, which corresponds to the error field block, to the adder 112. The adder 112 combines the reconstructed error field block from the texture reconstruction circuit 110 and the predicted top or bottom field block from the motion compensator 118 on a pixel-by-pixel basis, to thereby provide a combined result as a reconstructed top or bottom field block for said each current top or bottom field block to the previous frame processing circuit 114.

The previous frame processing circuit 114 sequentially modifies the reconstructed top or bottom field block based on the shape information or the reconstructed shape information for the current VOP, to thereby provide all the modified top and bottom field blocks as another previous interlaced texture information for a subsequent current VOP to the motion estimator 116 and the motion compensator 118.

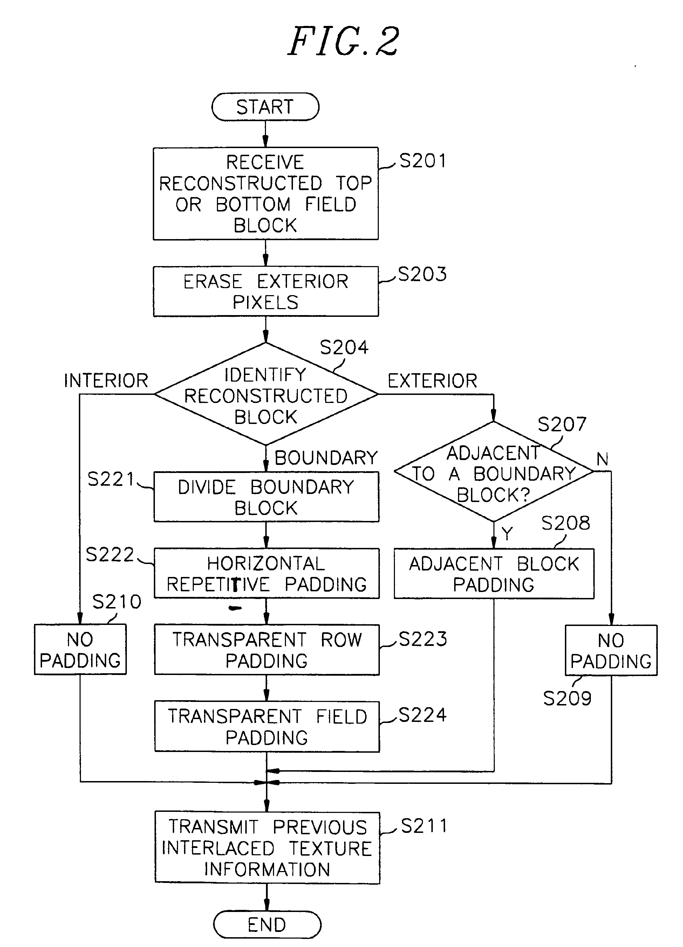

Referring to Fig. 2, there is a flow chart illustrating an important aspect of the invention related to the operation of the previous frame processing circuit 114 shown in Fig. 1, i.e., explaining a padding procedure for texture information on a previous frame on a macroblock-by-macroblock basis.

At step S201, the reconstructed top or bottom field block for the current top or bottom field block is sequentially received and, at step S203, exterior pixels in the reconstructed top or bottom field block are removed based on the shape information of the current VOP, wherein the exterior pixels are located at the outside of the contour for the current VOP. The reconstructed shape information may be used on behalf of the shape information, wherein the shape information is encoded in accordance with an encoding scheme to generate the encoded shape information and the encoded shape information is reconstructed as the reconstructed shape information by being decoded in the reverse order along the encoding scheme. While the exterior pixels are removed to be set as transparent pixels, i.e., undefined texture pixels, the remaining interior pixels in the reconstructed top or bottom field block are provided as defined texture pixels on a field block-by-field block basis.

At step S204, each reconstructed block is determined whether or not being located on the contour of the current VOP, wherein said each reconstructed block has the reconstructed top field block and the corresponding reconstructed bottom field block. In other words, said each reconstructed block is determined as an interior block, a boundary block, or an exterior block, wherein the interior block has only the defined texture pixels, the exterior block has only the undefined texture pixels and the boundary block has both the defined texture pixels and the undefined texture pixels. If the reconstructed block is determined as an interior block, at step S210, no padding is performed and the process goes to step S211.

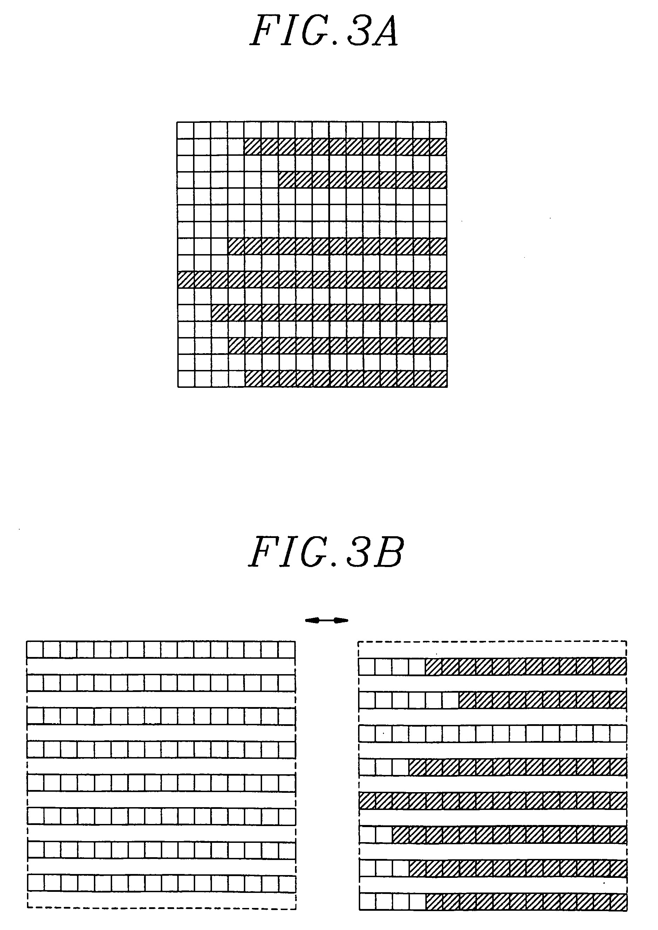

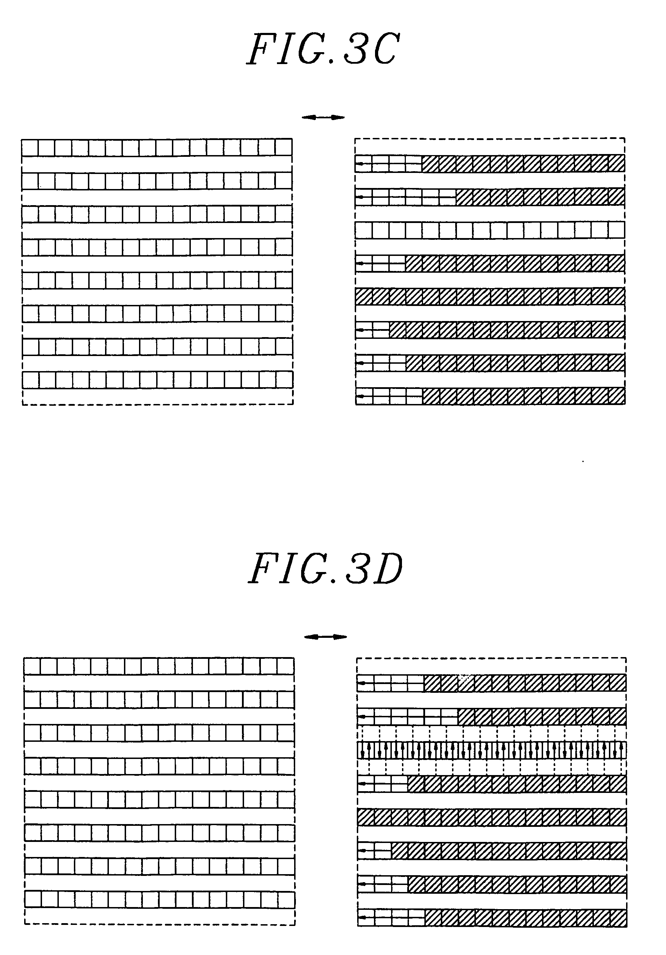

If the reconstructed block is a boundary block as shown in Fig. 3A, at steps S221 to S224, the undefined texture pixels of the boundary block are extrapolated from the defined texture pixels thereof to generate an extrapolated boundary block. First, at step S221, each boundary block is divided into a top and a bottom boundary field blocks as shown in Fig. 3B, each boundary field block having M/2 x N texture pixels. At step S222, the undefined texture pixels are padded on a row-by-row basis by using a horizontal repetitive padding technique as shown in Fig. 3C to generate a padded row for each row. In other words, the undefined texture pixels are filled by repeating boundary pixels toward the arrows as shown in Fig. 3C, wherein each boundary pixel among the defined texture pixels is located on the contour, i.e., the border, of the current VOP. If any undefined texture pixel may be filled by the repetition of more than one boundary pixel, the average value of the repeated values is used.

If there exist one or more transparent rows on each top or bottom field block, at step S223, each transparent row is padded by using one or more nearest defined or padded rows among the corresponding top or bottom field block, wherein the defined row has all the defined texture pixels therein. For example, as shown in Fig. 3D, each undefined texture pixel of the transparent row shown in the bottom field block is replaced with an average of two defined or padded texture pixels based on a nearest upward and a nearest downward padded rows, i.e., the 2nd and the 4th padded rows in the bottom field block. If the transparent row is located at the highest or the lowest row, i.e., corresponds to the 1st row 1 or the 8th row, said each texture pixel is replaced with a defined or padded texture pixel of the nearest padded or defined row.

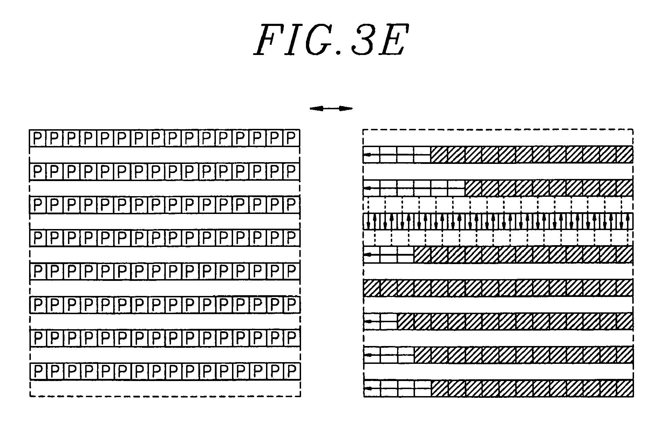

If there exists only one transparent boundary field block of the two boundary field blocks as shown in Fig. 3B, at step S224, the transparent boundary field block is padded based on another boundary field block of the boundary block, wherein the transparent boundary field block, i.e., an undefined field block having no defined texture pixel therein. In other words, if a top field block is transparent, all the undefined texture pixels of the transparent boundary field block, i.e., the top field block, may be replaced with a constant value P as shown in Fig. 3E, e.g., a mean value of the defined texture pixels within the bottom field block. The mean value of both the defined and the padded pixels within the bottom field block can also be used to fill the transparent field block. If necessary, a middle value 2^{L-1} of all the possible values for any texture pixel may be used based on the channel characteristics, wherein L is the number of bits assigned for each pixel. For example, if L is equal to 8, there are 256 texture pixels 0 to 255 and the middle value is determined to be 128.

To cope with a VOP of fast motion, the padding must be further extended to blocks which stretch outside the VOP but are immediately next to any boundary block. If the reconstructed block is determined as the exterior block at step S204, at step S207, it is determined whether the exterior block is adjacent to any extrapolated boundary block. If the exterior block is adjacent to no extrapolated boundary block, at step 209, no padding is performed and the process goes to step S211.

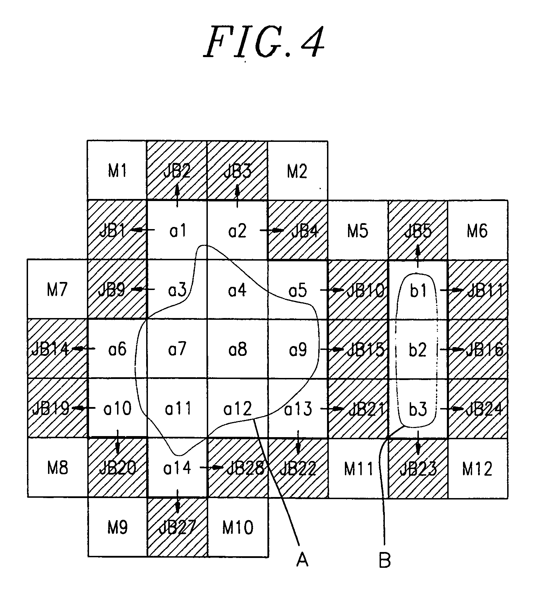

If the exterior block is adjacent to one or more extrapolated boundary blocks so that the exterior block corresponds to an undefined adjacent block, at step S208, the undefined texture pixels in the undefined adjacent block are padded based on one of the extrapolated boundary blocks to generate an extrapolated adjacent block for the undefined adjacent block, wherein each extrapolated boundary block has a part of the contour A or B of the current VOP and each undefined adjacent block is shown as a shaded region as shown in Fig. 4. If a plurality of extrapolated boundary blocks surround the undefined adjacent block, an extrapolated boundary block is selected in priority sequence of the leftward, upward, rightward and downward based on the undefined adjacent block and then a vertical or a horizontal border of the selected extrapolated boundary block is repeated rightwards, downwards, leftwards or upwards, wherein the vertical or the horizontal border adjoins the undefined adjacent block. As shown in Fig. 4, the undefined adjacent blocks JB4, JB20, JB9 and JB2 select their respective leftward, upward, rightward and downward extrapolated boundary blocks a2, a10, a3 and a1, respectively; and a rightmost vertical border of the extrapolated boundary block a2 is expanded rightward to fill the undefined adjacent block JB4, a lowermost horizontal border of the extrapolated boundary block a10 is expanded downward to fill the undefined adjacent block JB20 and so on. Also, undefined diagonal blocks such as M1 and M2 may be padded with a constant value, e.g., '128' to be the extrapolated adjacent block for the undefined diagonal block, wherein each undefined diagonal block is diagonally adjacent to the extrapolated boundary block and has all undefined texture pixels.

As described above, at step S211, the modified top and bottom field blocks, i. e, the extrapolated boundary and the extrapolated adjacent blocks as well as the interior blocks are provided as another previous interlaced texture information for the subsequent current VOP.

## Claims

1. A method for padding (S221-S224) a boundary macroblock having MxN defined and undefined texture pixels, M representing a number of rows and N representing a number of columns of the texture pixels, said boundary macroblock including two field blocks, the method comprising:
(a) if the field block has the defined and undefined texture pixels, padding (S222, S223) the undefined texture pixel of said field block based on the defined texture pixel of said field block, said padding (S222, S223) of the undefined texture pixel of said field block including:
(a1) padding (S222) one or more of the undefined texture pixels of said field block on a row-by-row basis to provide a padded row, and
(a2) if said field block has a transparent row having only the undefined texture pixels, padding (S223) the transparent row based on one or more of the padded rows; and
(b) if the field block has only the undefined texture pixels, padding (S224) said field block with a constant value.

2. A method for padding texture macroblocks, the texture macroblock including the boundary macroblock as defined in claim 1 and an undefined macroblock having only the undefined texture pixels, the method comprising:
applying the method of claim 1 to the boundary macroblock to provide a padded boundary macroblock; and
padding (S208) the undefined macroblock based on the padded boundary macroblock.

3. The method of claim 1 or 2, wherein said padding (S224) of the field block with a constant value includes padding (S224) said field block with a constant value of 2L-1, wherein L is a number of bits corresponding to the defined texture pixel in the boundary macroblock.

4. The method of claim 1 or 2, wherein said padding (S224) of the field block with a constant value includes padding (S224) said field block with a constant value of 128.

5. The method of claim 1 or 2, wherein said padding (S222) of one or more of the undefined texture pixels of the field block on a row-by-row basis includes padding (S222) the undefined texture pixel in a row based on one or more of the defined texture pixels adjacent said undefined texture pixel in said row.

6. The method of claim 1 or 2, wherein said padding (S223) of the transparent row based on one or more of the padded rows includes padding (S223) the transparent row based on one or more of the padded rows adjacent said transparent row.

7. An apparatus for padding a boundary macroblock having MxN defined and undefined texture pixels, M representing a number of rows and N representing a number of columns of the texture pixels, said boundary macroblock including two field blocks, the apparatus comprising:
(a) a defined field block padding circuit for padding (S222, S223) the undefined texture pixel of the field block having the defined and undefined texture pixels based on the defined texture pixel of said field block, the defined field padding circuit including:
(a1) a horizontal padding circuit for padding (S222) one or more of the defined texture pixels of the field block on a row-by-row basis to provide a padded row, and
(a2) a transparent row padding circuit for padding (S223) a transparent row having only the undefined texture pixels of the field block based on one or more of the padded rows; and
(b) an undefined field block padding circuit for padding (S224) the field block having only the undefined texture pixels with a constant value.

8. An apparatus for padding texture macroblocks, the texture macroblock including the boundary macroblock as defined in claim 7 and an undefined macroblock having only the undefined texture pixels, said apparatus comprising:
the apparatus for padding a boundary macroblock of claim 7 to provide a padded boundary macroblock, and
an undefined macroblock padding circuit for padding (S208) the undefined macroblock based on the padded boundary macroblock.

9. The apparatus of claim 7 or 8, wherein the constant value is 2L-1, wherein L is a number of bits corresponding to the defined texture pixels in the boundary macroblock.

10. The apparatus of claim 7 or 8, wherein the constant value is 128.

11. The apparatus of claim 8, wherein the undefined macroblock is adjacent the boundary macroblock.

## Patentansprüche

1. Verfahren zum Auffüllen (S221 - S224) eines Begrenzungsmakroblocks, der MxN definierte und undefinierte Textur-Pixel aufweist, wobei M eine Anzahl von Zeilen und N eine Anzahl von Spalten der Textur-Pixel repräsentiert, wobei der Begrenzungsmakroblock zwei Halbbild-Blöcke enthält, wobei das Verfahren folgendes umfasst:
(a) wenn der Halbbild-Block die definierten und undefinierten Textur-Pixel aufweist, Auffüllen (S222, S223) der undefinierten Texturpixel des Halbbild-Blocks basierend auf einem definierten Texturpixel des Halbbild-Blocks, wobei das Auffüllen (S222, S223) des undefinierten Texturpixels des Halbbild-Blocks enthält:
(a1) Auffüllen (S222) eines oder mehrerer der undefinierten Texturpixel des Halbbild-Blocks auf einer Zeile-um-Zeile-Basis, um eine aufgefüllte Zeile zu erzeugen, und
(a2) wenn der Halbbild-Block eine transparente Zeile mit nur den undefinierten Texturpixeln aufweist, Auffüllen (S223) der transparenten Zeile basierend auf einer oder mehreren der aufgefüllten Zeilen; und
(b) wenn der Halbbild-Block nur die undefinierten Texturpixel aufweist, Auffüllen (S224) des Halbbild-Blocks mit einem konstanten Wert.

2. Verfahren zum Auffüllen von Textur-Makroblöcken, wobei der Textur-Makroblock den Begrenzungsmakroblock wie in Anspruch 1 definiert und einen undefinierten Makroblock mit nur den undefinierten Texturpixeln aufweist, wobei das Verfahren folgendes umfasst:
Anwenden des Verfahrens von Anspruch 1 auf den Begrenzungsmakroblock, um einen aufgefüllten Begrenzungsmakroblock zu erzeugen; und
Auffüllen (S208) des undefinierten Makroblocks basierend auf dem aufgefüllten Begrenzungsmakroblock.

3. Verfahren nach Anspruch 1 oder 2, wobei das Auffüllen (S224) des Halbbild-Blocks mit einem konstanten Wert ein Auffüllen (S224) des Halbbild-Blocks mit einem konstanten Wert von 2^{L-1} enthält, wobei L eine Anzahl von Bits entsprechend dem definierten Texturpixel in dem Begrenzungsmakroblock ist.

4. Verfahren nach Anspruch 1 oder 2, wobei das Auffüllen (S224) des Halbbild-Blocks mit einem konstanten Wert ein Auffüllen (S224) des Halbbild-Blocks mit einem konstanten Wert von 128 enthält.

5. Verfahren nach Anspruch 1 oder 2, wobei das Auffüllen (S222) von einem oder mehreren der undefinierten Texturpixel des Halbbild-Blocks auf einer Zeile-um-Zeile-Basis ein Auffüllen (S222) des undefinierten Texturpixels in einer Zeile basierend auf einem oder mehreren der dem undefinierten Texturpixel in der Zeile benachbarten definierten Texturpixeln enthält.

6. Verfahren nach Anspruch 1 oder 2, wobei das Auffüllen (S223) der transparenten Zeile basierend auf einer oder mehreren der aufgefüllten Zeilen ein Auffüllen (S223) der transparenten Zeile basierend auf einer oder mehreren der der transparenten Zeile benachbarten aufgefüllten Zeilen enthält.

7. Vorrichtung zum Auffüllen eines Begrenzungsmakroblocks, der MxN definierte und undefinierte Texturpixel aufweist, wobei M eine Anzahl von Zeilen und N eine Anzahl von Spalten der Texturpixel repräsentiert, wobei der Begrenzungsmakroblock zwei Halbbild-Blöcke enthält, wobei die Vorrichtung folgendes umfasst:
(a) eine Definiert-Halbbild-Block-Auffüllschaltung zum Auffüllen (S222, S223) der undefinierten Texturpixel des Halbbild-Blocks, der die definierten und undefinierten Texturpixel aufweist, basierend auf einem definierten Texturpixel des Halbbild-Blocks, wobei die Definiert-Halbbild-Block-Auffüllschaltung folgendes enthält:
(a1) eine Horizontal-Auffüllschaltung zum Auffüllen (S222) eines oder mehrerer der definierten Texturpixel des Halbbild-Blocks auf einer Zeile-um-Zeile-Basis, um eine aufgefüllte Zeile zu erzeugen, und
(a2) eine Transparent-Zeilen-Auffüllschaltung zum Auffüllen (S223) einer transparenten Zeile, die nur undefinierte Texturpixel des Halbbild-Blocks aufweist, basierend auf einer oder mehreren der aufgefüllten Zeilen; und
(b) eine Undefiniert-Halbbild-Block-Auffüllschaltung zum Auffüllen (S224) des Halbbild-Blocks, der nur undefinierte Texturpixel aufweist, mit einem konstanten Wert.

8. Vorrichtung zum Auffüllen von Textur-Makroblöcken, wobei der Textur-Makroblock den Begrenzungsmakroblock wie in Anspruch 7 definiert und einen undefinierten Makroblock mit nur undefinierten Texturpixeln enthält, wobei die Vorrichtung folgendes umfasst:
die Vorrichtung zum Auffüllen eines Begrenzungsmakroblocks nach Anspruch 7, um einen aufgefüllten Begrenzungsmakroblock zu erzeugen, und
eine Undefiniert-Makroblock-Auffüllschaltung zum Auffüllen (S208) des undefinierten Makroblocks basierend auf dem aufgefüllten Begrenzungsmakroblock.

9. Vorrichtung nach Anspruch 7 oder 8, bei der der konstante Werte 2^{L-1} ist, wobei L eine Anzahl von Bits entsprechend den definierten Texturpixeln in dem Begrenzungsmakroblock ist.

10. Vorrichtung nach Anspruch 7 oder 8, bei der der konstante Wert 128 ist.

11. Vorrichtung nach Anspruch 8, bei der der undefinierte Makroblock dem Begrenzungsmakroblock benachbart ist.

## Revendications

1. Procédé pour le remplissage (S221-S224) d'un macro bloc limite ayant M x N pixels de texture définis et indéfinis, M représentant un nombre de rangées et N représentant un nombre de colonnes des pixels de texture, ledit macro bloc limite comprenant deux blocs de champ, le procédé consistant :
(a) si le bloc de champ a les pixels de texture définis et indéfinis, à remplir (S222, S223) le pixel de texture indéfini dudit bloc de champ sur la base du pixel de texture défini dudit bloc de champ, ledit remplissage (S222, S223) du pixel de texture indéfini dudit bloc de champ consistant :
(a1) à remplir (S222) un ou plusieurs des pixels de texture indéfinis dudit bloc de champ sur la base d'une rangée à la fois de sorte à produire une rangée remplie, et
(a2) si ledit bloc de champ a une rangée transparente contenant seulement les pixels de texture indéfinis, à remplir (S223) la rangée transparente sur la base d'une ou de plusieurs des rangées remplies ; et
(b) si le bloc de champ a seulement les pixels de texture indéfinis, à remplir (S224) ledit bloc de champ avec une valeur constante.

2. Procédé pour le remplissage de macro blocs de texture, le macro bloc de texture comprenant le macro bloc limite selon la revendication 1 et un macro bloc indéfini ayant seulement les pixels de texture indéfinis, le procédé consistant :
★ à appliquer le procédé selon la revendication 1 sur le macro bloc limite de sorte à produire un macro bloc limite rempli ; et
★ à remplir (S208) le macro bloc indéfini sur la base du macro bloc limite rempli.

3. Procédé selon la revendication 1 ou 2, dans lequel ledit remplissage (S224) du bloc de champ avec une valeur constante consiste à remplir (S224) ledit bloc de champ avec une valeur constante de 2L-1, dans lequel L est un nombre de bits correspondant au pixel de texture défini dans le macro bloc limite.

4. Procédé selon la revendication 1 ou 2, dans lequel ledit remplissage (S224) du bloc de champ avec une valeur constante consiste à remplir (S224) ledit bloc de champ avec une valeur constante égale à 128.

5. Procédé selon la revendication 1 ou 2, dans lequel ledit remplissage (S222) d'un ou plusieurs des pixels de texture indéfinis du bloc de champ sur la base d'une rangée à la fois consiste à remplir (S222) le pixel de texture indéfini dans une rangée sur la base d'un ou plusieurs des pixels de texture définis adjacents au dit pixel de texture indéfini dans ladite rangée.

6. Procédé selon la revendication 1 ou 2, dans lequel ledit remplissage (S223) de la rangée transparente sur la base d'une ou plusieurs des rangées remplies consiste à remplir (S223) la rangée transparente sur la base d'une ou plusieurs des rangées remplies adjacentes à ladite rangée transparente.

7. Appareil pour le remplissage d'un macro bloc limite ayant M x N pixels de texture définis et indéfinis, M représentant un nombre de rangées et N représentant un nombre de colonnes des pixels de texture, ledit macro bloc limite comprenant deux blocs de champ, l'appareil comprenant :
(a) un circuit de remplissage de bloc de champ défini adapté pour remplir (S222, S223) le pixel de texture indéfini du bloc de champ ayant les pixels de texture définis et indéfinis sur la base du pixel de texture défini dudit bloc de champ, le circuit de remplissage de champ défini comprenant :
(a1) un circuit de remplissage horizontal adapté pour remplir (S222) un ou plusieurs des pixels de texture définis du bloc de champ sur la base d'une rangée à la fois de sorte à produire une rangée remplie, et
(a2) un circuit de remplissage de rangée transparente adapté pour remplir (S223) une rangée transparente ayant seulement les pixels de texture indéfinis du bloc de champ sur la base d'une ou plusieurs des rangées remplies ; et
(b) un circuit de remplissage de bloc de champ indéfini adapté pour remplir (S224) le bloc de champ ayant seulement les pixels de texture indéfinis avec une valeur constante.

8. Appareil pour le remplissage de macro blocs de texture, le macro bloc de texture comprenant le macro bloc limite selon la revendication 7 et un macro bloc indéfini ayant seulement les pixels de texture indéfinis, ledit appareil comprenant :
★ l'appareil pour le remplissage d'un macro bloc limite selon la revendication 7 de sorte à produire un macro bloc limite rempli, et
★ un circuit de remplissage de macro bloc indéfini adapté pour remplir (S208) le macro bloc indéfini sur la base du macro bloc limite rempli.

9. Appareil selon la revendication 7 ou 8, dans lequel la valeur constante est 2L-1, dans lequel L est un nombre de bits correspondant aux pixels de texture définis dans le macro bloc limite.

10. Appareil selon la revendication 7 ou 8, dans lequel la valeur constante est égale à 128.

11. Appareil selon la revendication 8, dans lequel le macro bloc indéfini est adjacent au macro bloc limite.
